# FASCICULE DE BREVET EUROPEEN

(11) **EP 3 484 737 B1**
(45) Date de publication et mention de la délivrance du brevet: **22.04.2020**
(21) Numéro de dépôt: 17748523.2
(22) Date de dépôt: 10.07.2017
(51) Int. Cl.: B60K 15/03

(54) **RÉSERVOIR À CARBURANT MULTICOQUES ET PROCÉDÉ DE FABRICATION**
MEHRSCHALIGER KRAFTSTOFFTANK UND HERSTELLUNGSVERFAHREN
MULTI-SHELL FUEL TANK AND MANUFACTURING METHOD

(30) Priorité: 18.07.2016 FR 1656814; 22.11.2016 FR 1661367
(43) Date de publication de la demande: 22.05.2019
(73) Titulaire: Iguatech, 53000 Laval (FR)
(72) Inventeur: BESNARD, Pierric, 53000 Laval (FR)
(74) Mandataire: Godineau, Valérie
(86) Numéro de dépôt international: PCT/FR2017/051875
(87) Numéro de publication internationale: WO 2018/015636

(56) Documents cités:
- EP-A1- 2 711 224
- DE-A1- 19 909 041
- US-A- 5 398 839
- US-A1- 2002 047 015
- US-A1- 2002 053 568
- US-A1- 2006 011 173
- US-A1- 2011 215 102

## Description

### DOMAINE DE L'INVENTION

L'invention concerne un réservoir à carburant multicoques et son procédé de fabrication.

Elle concerne plus particulièrement un réservoir à carburant multicoques en matière plastique comprenant une coque interne comprenant au moins deux coquilles en matière de synthèse moulées par injection ou compression et assemblées par soudure, une coque externe en matière de synthèse entourant ladite coque interne, cette coque externe comprenant au moins deux coquilles assemblées entre elles, la coque interne étant munie intérieurement au moins d'un pilier de liaison des coquilles entre elles et/ou d'une nervure.

### ART ANTÉRIEUR

Les réservoirs à carburant en matière plastique monocouche et multicouches équipent depuis de nombreuses années, les véhicules à moteur thermique essence ou diesel. Les réservoirs à carburant sont généralement obtenus par extrusion-soufflage (avec préforme de forme cylindrique ou de forme en demi-cylindres ou sous forme de feuilles) comme l'illustre, par exemple, le brevet US2015/0083719 ou par thermoformage ou par rotomoulage.

Toutefois, le durcissement des normes anti-pollution et le développement des véhicules hybrides obligent désormais de tels réservoirs à résister à une large plage de variation de la pression interne du réservoir (typiquement de l'ordre de -500 mbar à +600 mbar). La résistance ainsi que la stabilité dimensionnelle du réservoir sous l'effet de la pression ou de la dépression prennent alors une importance significative.

Pour résoudre ce problème de résistance à une pression ou dépression élevée, diverses solutions sont envisagées.

Une solution actuellement sur le marché consiste en un réservoir métallique qui augmente le poids du véhicule de même que la consommation de carburant et les émissions de gaz d'échappement.

D'autres solutions connues pour les réservoirs en plastique moulés par extrusion-soufflage ou par thermoformage, consistent à utiliser des renforts internes constitués de différents matériaux et/ou à augmenter l'épaisseur de la paroi des réservoirs. Ces solutions sont décrites dans les brevets US 2014/0110038, US 2014/0158696, US 2015/0083719, US 2015/0217635, et US 2015/0224871. Une autre solution consiste à munir le réservoir de plots de recollement (c'est-à-dire de souder localement les parois inférieure et supérieure du réservoir entre elles). D'autres solutions décrites dans les brevets US 5,020,687, WO 2012/031705 et WO 2014/154900 consistent à fixer des renforts fibreux sur la paroi extérieure du réservoir.

Le document US 5 398 839 A divulgue un réservoir à carburant, et le document US 2011/215102 A1 divulgue un procédé de fabrication d'un réservoir à carburant.

Toutes les solutions mises en œuvre augmentent généralement le poids du réservoir et/ou réduisent son volume utile et/ou augmentent son coût et/ou complexifient son recyclage en fin de vie en raison de la difficulté à séparer les différentes matières constitutives du réservoir.

### BUT ET RÉSUMÉ

Un but de l'invention est donc de proposer un réservoir à carburant dont la conception permet d'obtenir une bonne stabilité dimensionnelle et une bonne résistance à la pression ou à la dépression interne du réservoir tout en facilitant le recyclage des matériaux en fin de vie du produit et en optimisant le volume utile, c'est-à-dire le volume intérieur disponible pour le carburant du réservoir.

Un autre but de l'invention est de proposer un réservoir à carburant dont la tenue au feu est conforme à la réglementation tout en autorisant un recyclage aisé des matériaux en fin de vie du produit.

À cet effet, l'invention a pour objet un réservoir à carburant comprenant une coque interne comprenant au moins deux coquilles en matière de synthèse moulées par injection ou compression et assemblées par soudure, une coque dite externe en matière de synthèse entourant ladite coque interne, cette coque externe comprenant au moins deux coquilles assemblés entre elles, la coque interne étant munie intérieurement au moins d'un pilier de liaison des coquilles entre elles et/ou d'une nervure, et la coque interne étant, sur au moins une partie de son pourtour, séparée de la coque externe par un volume de gaz, caractérisé en ce que la coque interne est sur sa périphérie externe, au niveau de la zone d'assemblage par soudure des coquilles, dépourvue de trottoir ou de rebord de soudure sur au moins une partie de son pourtour.

Grâce à la présence de ce volume de gaz, la séparation des coques est facilitée en vue du recyclage du réservoir sans nuire à la stabilité dimensionnelle et à la résistance à la pression ou dépression interne dudit réservoir. L'absence de rebord ou de trottoir de soudure sur au moins une partie du pourtour de la coque interne permet une réduction du volume de gaz et une optimisation du volume de la coque interne.

Selon un mode de réalisation, la coque externe et la coque interne sont reliées ponctuellement l'une à l'autre. Ces zones de liaison ponctuelle des coques interne et externe entre elles permettent de caler la coque interne dans la coque externe. La présence de zones de liaison uniquement ponctuelle entre les coques interne et externe facilite en outre la séparation des coques en vue d'un recyclage.

Selon un mode de réalisation de l'invention, la ou au moins l'une des zones de liaison ponctuelle des coques interne et externe entre elles est formée par une soudure des coques interne et externe entre elles.

Selon un autre mode de réalisation de l'invention, la ou au moins l'une des zones de liaison ponctuelle des coques interne et externe entre elles est formée par une partie mâle en saillie de l'une des coques, la partie mâle en saillie de ladite coque étant noyée au moins partiellement dans la matière constitutive de l'autre coque.

Selon un autre mode de réalisation de l'invention, la ou au moins l'une des zones de liaison ponctuelle des coques interne et externe entre elles est formée par une partie mâle en saillie de l'une des coques, la partie mâle en saillie de ladite coque étant emmanchée serrée ou encliquetée dans un logement disposé dans l'autre coque.

Selon un autre mode de réalisation de l'invention, la ou au moins l'une des zones de liaison ponctuelle des coques interne et externe est formée par l'intermédiaire d'une pièce de liaison interposée entre lesdites coques interne et externe et solidarisée à chacune des coques.

De préférence, dans ce mode de réalisation, la pièce de liaison est fixée à l'une des coques par un montage à emboîtement de formes géométriques complémentaires et à l'autre coque par une liaison de forme ou par une liaison par soudure ou par emmanchement serré ou par encliquetage.

Selon un autre mode de réalisation, les coquilles de la coque externe sont assemblées par un plan de joint, et la ou au moins l'une des zones de liaison ponctuelle des coques interne et externe entre elles est formée par une forme en saillie de la coque interne noyée dans une forme disposée dans le plan de joint de la coque externe. Il en résulte, lors d'une exposition au feu du réservoir, une limitation du déplacement vers le bas de la coque interne à l'intérieur de la coque externe.

Selon un mode de réalisation de l'invention, la ou au moins l'une des zones de liaison ponctuelle des coques interne et externe est disposée au niveau de la partie de la coque interne formant le fond du réservoir et au niveau de la partie de la coque externe formant le fond du réservoir. Il en résulte la possibilité de limiter le flambage du fond de la coque externe en particulier lors d'une exposition au feu.

Selon un mode de réalisation de l'invention, la ou au moins l'une des zones de liaison ponctuelle des coques interne et externe est disposée au niveau de la partie de la coque interne formant le dessus du réservoir et au niveau de la partie de la coque externe formant le dessus du réservoir. Il en résulte, lors d'une exposition au feu du réservoir, une limitation du déplacement vers le bas de la coque interne à l'intérieur de la coque externe.

Selon un mode de réalisation, au moins un composant choisi parmi un tuyau ou un écran ou une gaine ou une sangle ou un renfort, ou un filtre à charbon actif ou un filtre à carburant ou un fil électrique ou un boîtier ou une pompe ou une électrovanne ou un capteur ou une carte électronique ou une entretoise ou un plot filtrant ou un lien ou un support ou un clapet ou un régulateur de pression est inséré dans le volume de gaz.

Selon un mode de réalisation, au moins l'une des coques, de préférence la coque interne, est imperméable au carburant. Cette imperméabilité est vérifiée quelle que soit la phase liquide ou gazeuse du carburant.

Selon un mode de réalisation, au moins l'un des matériaux de la coque imperméable au carburant est choisi dans le groupe de matériaux formé par les polyoxyméthylènes, les polymères d'alcool vinylique, les polyamides, les polyesters, les polycétones, les polymères fluorés, les polyacrylonitriles, les halogénures de polyvinylidène, les polymères à cristaux liquides et les polyoléfines.

La réalisation de la coque interne en un matériau imperméable au carburant permet d'éviter toute souillure de la coque externe. Il en résulte une facilité du recyclage.

Selon un mode de réalisation, la coque interne et la coque externe sont en des matériaux différents. La coque externe peut, par exemple, présenter des caractéristiques de résistance au feu supérieures aux caractéristiques de résistance au feu de la coque interne.

Selon un mode de réalisation, la coque externe et la coque interne sont en outre en contact d'appui ponctuel. Cela permet d'augmenter la stabilité de la coque interne à l'intérieur de la coque externe sans nuire à la facilité de recyclage.

De préférence, la ou au moins l'une des zones de contact d'appui est formée par un bossage ou saillie d'au moins l'une des coques.

Selon un mode de réalisation, les coquilles de la coque interne sont disposées, à l'état préassemblé, à l'intérieur de la coque externe. Il en résulte la possibilité de pouvoir vérifier l'étanchéité de la coque interne, notamment au niveau de la soudure du plan de joint, avant de la recouvrir de la coque externe.

Selon un mode de réalisation, le volume intérieur de la coque interne et le volume de gaz séparant la coque externe de la coque interne ne communiquent pas ou pas directement entre eux. Cette absence de communication directe entre le volume intérieur de la coque interne et le volume de gaz séparant les coques interne et externe permet de limiter voire d'éviter une souillure, notamment en carburant, de la coque externe par la coque interne.

Selon un mode de réalisation dans lequel la coque interne est munie intérieurement d'au moins un pilier de liaison, le ou au moins l'un des piliers de liaison est un pilier télescopique.

L'invention a encore pour objet un procédé de fabrication d'un réservoir à carburant, le réservoir à carburant étant conforme au réservoir précité, ledit procédé comprenant une étape d'assemblage des coquilles de la coque interne par soudure, une étape d'insertion de la coque interne entre les coquilles de la coque externe, et une étape de recouvrement de la coque interne par les coquilles de la coque externe, la coque interne étant, sur au moins une partie de son pourtour, séparée de la coque externe par un volume de gaz et sur sa périphérie externe, au niveau de la zone d'assemblage par soudure des coquilles, dépourvue de trottoir ou de rebord de soudure sur au moins une partie de son pourtour.

### BRÈVE DESCRIPTION DES DESSINS

L'invention sera bien comprise à la lecture de la description suivante d'exemples de réalisation, en référence aux dessins annexés dans lesquels :
- La figure 1A représente une vue schématique en perspective et en coupe partielle d'un réservoir à carburant conforme à l'invention, la coque externe étant munie d'un trottoir de soudure s'étendant sur tout le pourtour de la coque externe.
- La figure 1B représente une vue schématique en perspective et en coupe partielle d'un réservoir à carburant conforme à l'invention, la coque externe étant munie ponctuellement d'un trottoir de soudure réalisé sous forme d'une patte.
- La figure 1C représente une vue schématique en perspective et en coupe partielle d'un réservoir à carburant conforme à l'invention, la coque externe étant exempte de trottoir de soudure.
- La figure 2A représente une vue schématique en coupe d'un réservoir à carburant dont la coque interne est renforcée par des piliers soudés et dans laquelle des zones de contact d'appui ponctuel et des zones de liaison ponctuelle entre coques interne et externe du réservoir sont illustrées.
- La figure 2B représente une vue schématique en coupe d'un réservoir à carburant dont la coque interne est renforcée par des piliers soudés et dans laquelle des zones de contact d'appui entre coques interne et externe sont illustrées.
- La figure 2C représente une vue schématique en coupe d'un réservoir à carburant dont la coque interne est renforcée par des piliers soudés et dans laquelle des zones de liaison ponctuelle entre coques interne et externe sont illustrées.
- La figure 3 représente une vue schématique en coupe d'un réservoir à carburant avec une sangle de maintien logée entre les deux coques.
- La figure 4 représente une vue schématique en coupe d'un réservoir à carburant dont la coque interne est renforcée par des nervures et avec une sangle de maintien logée entre les deux coques.
- La figure 5 représente une vue schématique en coupe d'un réservoir à carburant conforme à l'invention dont la coque interne est renforcée par des piliers télescopiques et une vue de détail d'un pilier, un écran étant logé entre les deux coques.
- La figure 6 représente une vue schématique en coupe d'un moule d'outillage et des coquilles de la coque externe lors de l'étape de fabrication par extrusion-soufflage ou thermoformage ou par un procédé équivalent des coquilles de la coque externe.
- La figure 7A représente une vue schématique en coupe des outillages, de la coque interne et des coquilles de la coque externe lors de l'opération de mise en place de la coque interne entre les coquilles de la coque externe dans le cas d'un procédé de fabrication de la coque externe par extrusion-soufflage ou thermoformage ou par un procédé équivalent.
- La figure 7B représente une vue schématique en coupe des outillages, de la coque interne et des coquilles de la coque externe lors de l'opération de mise en place de la coque interne entre les coquilles de la coque externe dans le cas d'un procédé de fabrication de la coque externe par injection ou compression ou par rotomoulage ou par un procédé équivalent.
- La figure 8 représente une vue schématique en coupe des outillages, de la coque interne et des coquilles de la coque externe à l'état assemblé des coquilles de la coque externe.
- La figure 9 représente une vue schématique en coupe des outillages et du réservoir à carburant lors de l'opération d'éjection dudit réservoir des outillages.
- La figure 10 représente une vue schématique en coupe du réservoir à carburant obtenu.
- La figure 11 représente une vue schématique partielle en coupe des coques interne et externe du réservoir liées ponctuellement par une liaison de forme.
- La figure 12 représente une vue schématique partielle en coupe des coques interne et externe du réservoir liées ponctuellement par emmanchement serré.
- La figure 13 représente une vue schématique partielle en coupe des coques interne et externe du réservoir liées ponctuellement par encliquetage.
- La figure 14 représente une vue schématique partielle en coupe des coques interne et externe du réservoir liées ponctuellement par soudure.
- La figure 15 représente une vue schématique partielle en coupe des coques interne et externe du réservoir liées ponctuellement par une pièce de liaison.
- La figure 16 représente une vue schématique en coupe des coques interne et externe du réservoir liées entre elles au niveau de pattes situées dans le plan de joint de la coque externe.

### DESCRIPTION DÉTAILLÉE

Comme mentionné ci-dessus, le réservoir 1 à carburant, objet de l'invention, est un réservoir multicoques comprenant au moins une coque 2 interne et une coque 4 dite externe entourant la coque 2 interne. Ces coques interne et externe sont distinctes l'une de l'autre. Ces coques interne et externe sont fabriquées de manière séparée.

La coque 2 interne comprend au moins deux coquilles 31, 32 en matière de synthèse, moulées par injection ou compression et assemblées par soudure.

Il doit être noté que par "injection", on entend indifféremment l'injection simple, l'injection compression, l'injection séquentielle, la co-injection, l'injection surmoulage, l'injection gaz ou une combinaison de ces techniques d'injection.

Les techniques d'injection ou de compression permettent de mouler un grand nombre de formes comme par exemple mais non limitativement des nervures, des supports de fixation, des clips de fixation, des piliers de liaison, des bols de rétention et/ou de stabilisation du carburant, des chicanes ou autres.

La zone d'assemblage par soudure entre les coquilles 31, 32, encore appelée plan de joint, est représentée en 12 aux figures.

La coque 4 externe comprend au moins deux coquilles 41, 42 en matière de synthèse assemblées entre elles par soudure. Ces coquilles 41, 42 externes peuvent être réalisées par injection, par compression, par extrusion-soufflage, par thermoformage, ou par rotomoulage.

Il doit être noté que bien que les figures présentent ici des coques avec des coquilles inférieure et supérieure similaires, leurs formes peuvent être très différentes. De même, bien que les figures présentent des parcours de plans de joint simples, leurs parcours peuvent être tortueux. En outre, les parcours des plans de joint des coques interne et externe peuvent avoir un parcours similaire ou très différent.

Comme mentionné ci-dessus, chaque coquille des coques interne 2 et externe 4 est une pièce en matière de synthèse, en particulier, en matière plastique. Par "plastique", on entend toute matière thermoplastique, y compris les élastomères thermoplastiques comprenant au moins un polymère thermoplastique. Les polymères comprennent aussi bien les homopolymères que les copolymères.

Les coques interne et externe peuvent être constituées de matières plastiques différentes. De même, les coquilles d'une même coque, peuvent être constituées de matières plastiques différentes ou de grades différents. Dans le cas d'un assemblage par soudure, ces matières sont compatibles pour la soudure. Les coquilles peuvent être constituées de matière vierge et/ou recyclée.

De manière non limitative, il est possible d'utiliser des polyoléfines, des polyoxyméthylènes, des polymères d'alcool vinylique (PVOH et EVOH), des polyamides, des polyesters, des polycétones, des polymères fluorés, des polyacrylonitriles, des halogénures de polyvinylidène (PVDF, PVDC), des polymères à cristaux liquides. Il est possible d'utiliser un mélange de polymères ainsi qu'un mélange de polymères avec des charges naturelles et/ou organiques et/ou inorganiques comme, par exemple, mais non limitativement : le verre, le carbone et le talc. Les charges peuvent se présenter sous la forme de fibres, de paillettes, de billes, de poudre ou autres. Il est également possible d'utiliser des structures multicouches constituées de couches empilées comprenant au moins un polymère thermoplastique. Idéalement, au moins l'une des coques est imperméable au carburant. Dans l'exemple représenté, la coque 2 interne est la coque imperméable au carburant. Il en résulte un recyclage plus aisé de la coque externe, après séparation des coques. Dans ce cas, au moins l'un des matériaux de la coque imperméable au carburant est choisi dans le groupe de matériaux formé par les polyoxyméthylènes, les polymères d'alcool vinylique, les polyesters, les polycétones, les polymères fluorés, les polyacrylonitriles, les halogénures de polyvinylidène, les polymères à cristaux liquides, les polyamides y compris les polyamides aromatiques tels que les polyarylamides et les polyphthalamides. De tels matériaux constituent une barrière aux liquides et/ou aux gaz contenus dans le réservoir, de manière à minimiser la perméabilité du réservoir. L'épaisseur de la paroi peut être également choisie de manière à limiter la perméabilité du réservoir.

La coque interne, par exemple en polyéthylène, peut être soumise à un traitement de surface (fluoruration ou sulfonation) dans le but de la rendre imperméable au carburant.

La coque 2 interne est encore munie, intérieurement, d'au moins une nervure 5 et/ou d'au moins un pilier 6 de liaison des coquilles 31, 32 entre elles pour renforcer ladite coque 2.

La nervure 5 permet non seulement de renforcer la coque interne 2, mais elle permet aussi de limiter les mouvements et/ou les vagues de carburant à l'intérieur du réservoir, atténuant ainsi les bruits de clapots et/ou de ballotement du carburant. La nervure 5 peut être dimensionnée de façon à réduire ces bruits.

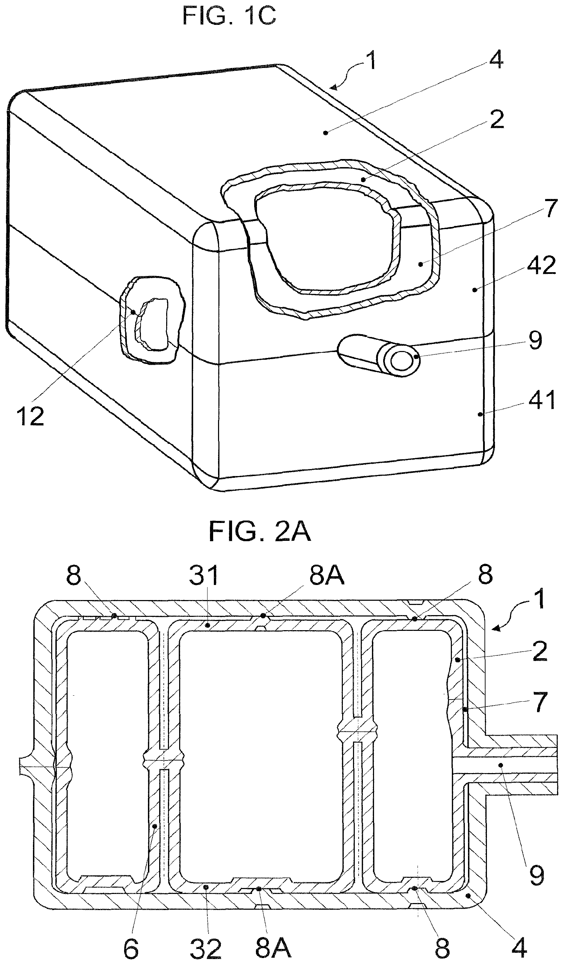

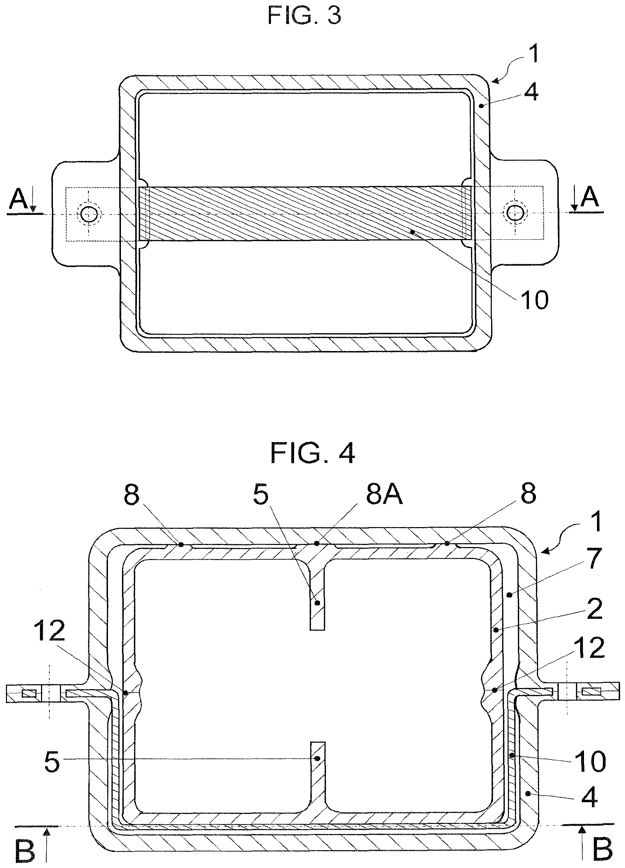

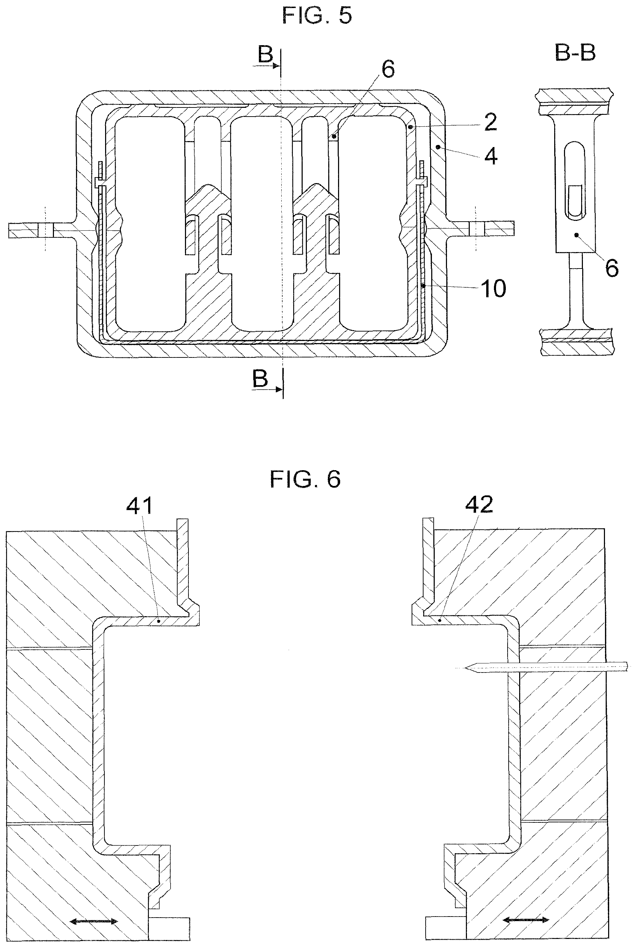

Ainsi, un exemple d'une nervure 5 est fourni à la figure 4 et un exemple de piliers de liaison formés de deux éléments disposés solidaires chacun d'une coquille de la coque interne et montés à emboîtement coulissant est représenté à la figure 5. Dans cet exemple, le raccordement des piliers coulissants est obtenu par encliquetage. Un exemple de piliers de liaison non télescopiques est représenté à la figure 2A. Il est aussi possible de raccorder le ou les piliers entre eux par d'autres moyens comme par exemple un système de raccord rapide encliquetable ou un emmanchement serré.

De manière caractéristique à l'invention, la coque 2 interne est, sur au moins une partie de son pourtour, séparée de la coque 4 externe par un volume 7 de gaz, tel que de l'air.

En outre, la coque 2 interne est sur sa périphérie externe, au niveau de la zone 12 d'assemblage par soudure des coquilles 31, 32, dépourvue de trottoir ou de rebord de soudure sur au moins une partie de son pourtour. Ainsi, dans l'exemple représenté à la figure 1C, la coque 2 interne est dépourvue de trottoir de soudure sur tout le pourtour.

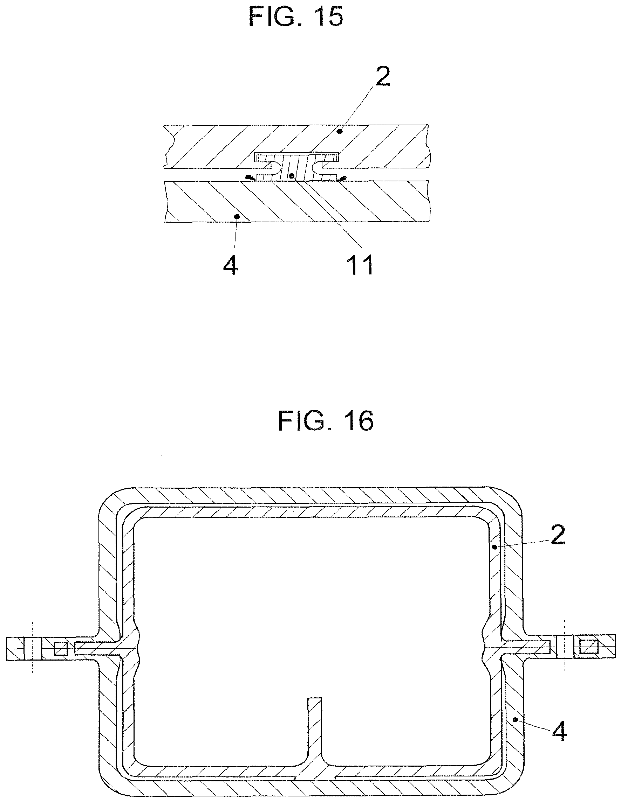

Dans l'exemple représenté à la figure 16, le trottoir de soudure est présent ponctuellement sur la périphérie externe de la coque 2 interne au niveau de la zone 12 d'assemblage par soudure des coquilles 31, 32 et se présente sous forme d'une ou plusieurs pattes aptes à s'insérer dans le plan de joint des coquilles 41, 42 de la coque externe.

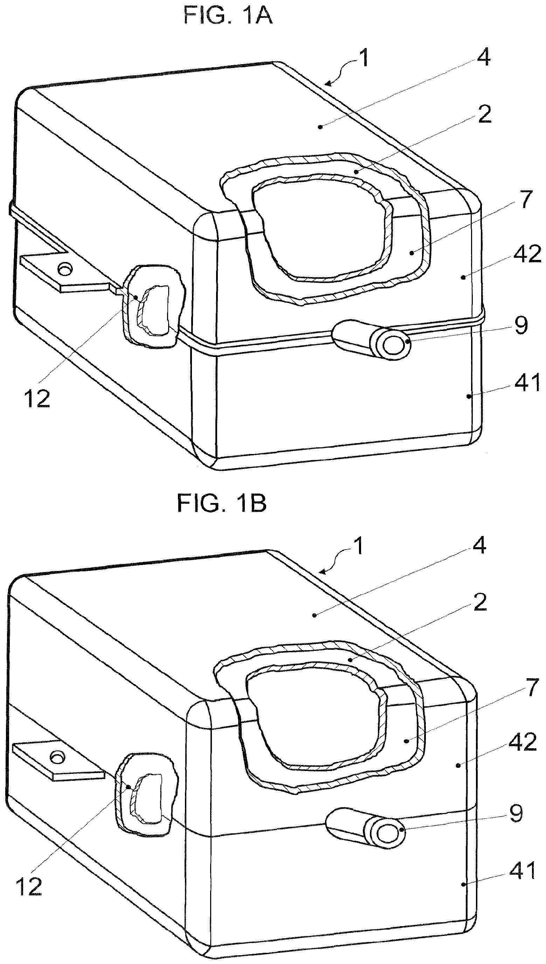

La coque 4 externe peut, quant à elle, être soit dépourvue de rebord ou trottoir de soudure comme illustré à la figure 1C, soit munie ponctuellement d'un rebord ou trottoir de soudure comme illustré à la figure 1B, soit munie d'un trottoir de soudure continu s'étendant sur tout le pourtour de la coque externe comme illustré à la figure 1A.

Les coques interne et externe peuvent être liées ponctuellement entre elles et/ou être en contact d'appui ponctuel.

La coque 4 externe et la coque 2 interne peuvent donc être reliées ponctuellement l'une à l'autre. Ces zones 8A de liaison ponctuelle peuvent affecter un grand nombre de formes. Ces zones 8A de liaison ponctuelle s'étendent entre la coque 4 externe et la coque 2 interne.

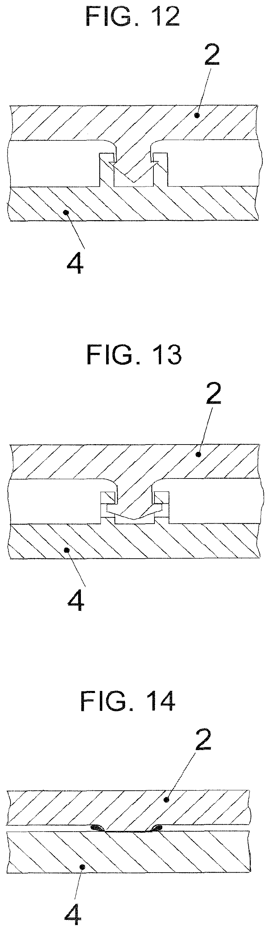

Dans l'exemple représenté à la figure 14, la zone 8A de liaison ponctuelle est réalisée par une soudure ponctuelle des coques interne et externe entre elles. Avant le recouvrement de la coque 2 interne par les coquilles 41 et 42 de la coque 4 externe, les zones à souder peuvent être chauffées en vue de fondre la matière. Dans le cas d'une fabrication des coquilles 41 et 42 par extrusion-soufflage ou par thermoformage, le chauffage des coquilles 41 et 42 n'est pas nécessaire, la matière des coquilles 41 et 42 étant déjà ramollie. En fin d'étape de rapprochement des coquilles 41 et 42, la (ou les) zone(s) fondue(s) de la coque 2 interne et de la (ou des) coquille(s) 41 et/ou 42 sont mises en contact sous pression puis refroidies en vue de la soudure. En variante, la soudure peut être obtenue par la simple mise en contact sous pression d'une zone non fondue avec une zone fondue puis refroidie.

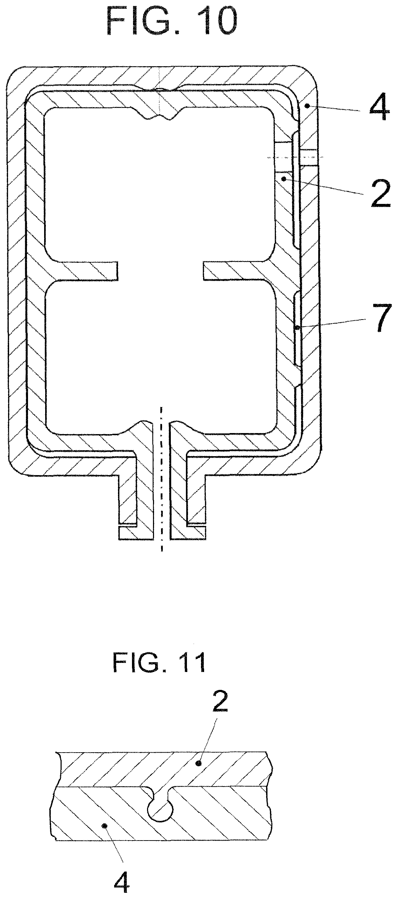

Dans l'exemple représenté à la figure 11, la zone de liaison 8A est réalisée par liaison de forme. En particulier, la coque 2 interne présente ici une partie mâle, c'est-à-dire une forme en relief qui fait saillie de la surface externe de la coque 2 interne et vient se noyer au moins partiellement dans la matière constitutive de la coque 4 externe. Ainsi, avant le recouvrement de la coque 2 interne par les coquilles 41 et 42 de la coque 4 externe, la ou les zones de liaison peuvent être chauffées en vue de fondre la matière. Dans le cas d'une fabrication des coquilles 41 et 42 par extrusion-soufflage ou par thermoformage, le chauffage des coquilles 41 et 42 n'est pas nécessaire, la matière des coquilles 41 et 42 étant déjà ramollie. En fin d'étape de rapprochement des coquilles 41 et 42, la forme en relief de la coque 2 interne s'enfonce dans la matière ramollie de la coquille 41 ou 42 en regard. Bien évidemment, un mode de réalisation inverse à la partie mâle portée par la coque externe aurait pu être envisagé de manière équivalente sans sortir du cadre de l'invention.

Dans l'exemple représenté à la figure 15, une pièce 11 de liaison est interposée entre les coques interne 2 et externe 4 et solidarisée à chacune des coques. En particulier, la pièce 11 de liaison est préfixée à la coque 2 interne par un montage à emboîtement coulissant. A cet effet, la surface externe de la coque 2 interne est munie d'une rainure à l'intérieur de laquelle une partie de la pièce 11 de liaison coulisse. La pièce 11 de liaison est ensuite fixée à la coque 4 externe par soudure. Une liaison par liaison de forme ou par emmanchement serré ou par encliquetage aurait également pu être envisagée.

Les zones 8A de liaison ponctuelle permettent de maintenir solidaires les coques interne et externe notamment lors des essais feu ou lors du vieillissement du réservoir pour éviter l'affaissement du réservoir. Afin de prévenir une fuite de carburant, les zones 8A de liaison peuvent être dimensionnées de manière à se rompre, à se désolidariser, ou à se déformer lors d'un choc sur le réservoir afin d'éviter la rupture des deux coques.

Généralement, au moins une zone 8A de liaison ponctuelle est disposée au niveau de la partie de la coque 2 interne formant le fond du réservoir 1 et de la partie de la coque 4 externe formant le fond du réservoir 1, comme illustré à la figure 2A.

De même, de préférence, au moins une zone 8A de liaison ponctuelle est disposée au niveau de la partie de la coque 2 interne formant le dessus du réservoir 1 et de la partie de la coque 4 externe formant le dessus du réservoir 1 comme illustré à la figure 2A.

Les coques 4 externe et 2 interne peuvent en variante ou en complément être en contact d'appui ponctuel.

Dans l'exemple représenté à la figure 2A, la coque 4 externe et la coque 2 interne sont en outre en contact 8 d'appui ponctuel. Ces zones 8 de contact d'appui ponctuel peuvent affecter un grand nombre de formes.

Dans l'exemple représenté à la figure 2A, les zones de contact 8 d'appui sont formées par des bossages. Un bossage d'une coque vient en appui au niveau de son sommet par exemple, sur un plein de l'autre coque. Il en résulte la création d'un espace libre entre les coques interne et externe, sur au moins une partie du pourtour de la coque interne. Au moins l'un des bossages peut faire office de plot de centrage de la coque interne dans la coque externe.

Il doit être noté que par "contact d'appui", on entend que les coques ne sont pas liées entre elles mais simplement en appui au niveau de la zone de contact contrairement aux zones 8A de liaison au niveau desquelles les coques 2 interne et 4 externe sont solidarisées l'une à l'autre.

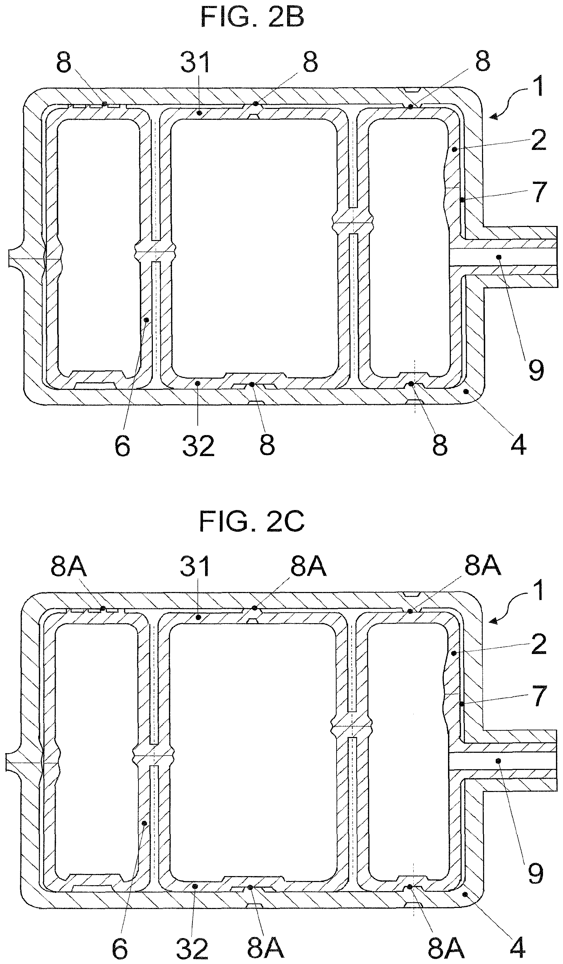

Dans le réservoir représenté à la figure 2B, les coques interne et externe sont exemptes de zones de liaison ponctuelle et sont simplement en contact d'appui ponctuel, les zones de contact d'appui ponctuel étant représentées en 8.

Dans le réservoir représenté à la figure 2C, les coques interne et externe sont exemptes de zones de contact d'appui ponctuel et ne comportent que des zones 8A de liaison ponctuelle.

Ainsi, les coques interne et externe peuvent être liées ponctuellement entre elles et/ou être en contact d'appui ponctuel.

Cette liaison ponctuelle ou ce contact d'appui ponctuel entre coques interne et externe simplifient la séparation des coques l'une de l'autre et facilitent donc le recyclage des coques. Le volume de gaz, en particulier d'air, créé entre coques interne et externe autorise également une variation dimensionnelle desdites coques. Ce volume de gaz crée aussi une isolation thermique et/ou phonique entre la coque interne et la coque externe. Ce volume 7 de gaz peut également être utilisé pour y loger un ou plusieurs composants 10.

L'un des composants 10 peut être constitué d'un tuyau ou d'un écran ou d'une gaine ou d'une sangle ou d'un renfort, ou d'un filtre à charbon actif ou d'un filtre à carburant ou d'un fil électrique ou d'un boîtier ou d'une pompe ou d'une électrovanne ou d'un capteur ou d'une carte électronique ou d'une entretoise ou d'un plot filtrant ou d'un lien ou d'un support ou d'un clapet ou d'un régulateur de pression ou autres.

Chaque composant inséré entre les deux coques peut être monté libre ou relié à la coque interne et/ou à la coque externe. Ainsi, dans l'exemple représenté aux figures 3 et 4, le composant est une sangle qui passe sous le fond de la coque interne, puis remonte le long des parois latérales de la coque interne avant d'être fixée à la coque externe au niveau du plan de joint des coquilles 41, 42 de la coque 4 externe.

Ces composants (sangle, écran de protection, gaine, renforts, etc.), logés entre les coques, peuvent être constitués de divers matériaux tels que, par exemple mais non limitativement, du métal, du plastique, du caoutchouc, du bois, du matériau composite ou autres. La coque interne 2 et/ou les coquilles 41 et/ou 42 de la coque externe 4 peuvent être équipées de ces composants avant ou pendant l'assemblage des coquilles 41 et 42 de la coque externe 4. En outre, des composants similaires (sangle, écran de protection, etc.) peuvent être fixés à l'extérieur du réservoir 1 sur la coque externe 4.

De même, des composants, tels que clapet, tuyau, pompe, jauge, chicane ou autres, peuvent être positionnés dans les coquilles 31 et/ou 32 de la coque interne avant soudure de ces coquilles entre elles.

En outre, la coque interne 2 peut être équipée de composants tels que clapet, pipette, pastille d'obturation ou autres fixés sur sa peau externe avant le recouvrement par les coquilles 41 et 42 de la coque externe 4.

Le réservoir comprend encore au moins un orifice 9 de remplissage, tel que représenté à la figure 1A, et/ou un orifice de vidange et/ou un orifice de ventilation et/ou un orifice de dégazage non représenté.

La conception du réservoir est telle que le volume intérieur de la coque 2 interne et le volume 7 de gaz séparant la coque 4 externe de la coque 2 interne ne communiquent pas ou pas directement entre eux. Ainsi, au moment du remplissage ou de la vidange du réservoir, le carburant contenu dans la coque interne 2 ne peut pas pénétrer directement dans le volume de gaz séparant les coques interne et externe. Ce volume 7 de gaz peut être un volume fermé, ou en communication avec l'extérieur via au moins un orifice ménagé dans la coque externe. Cet orifice peut être équipé d'un dispositif anti-écoulement en cas d'accident du véhicule (rupture de la coque interne) et/ou relié à une électrovanne et/ou à un filtre à charbon actif et/ou autre. En outre, la présence d'un ou plusieurs orifices dans la coque externe 4 peut permettre une circulation de fluide dans ce volume 7, par exemple, pour refroidir le carburant.

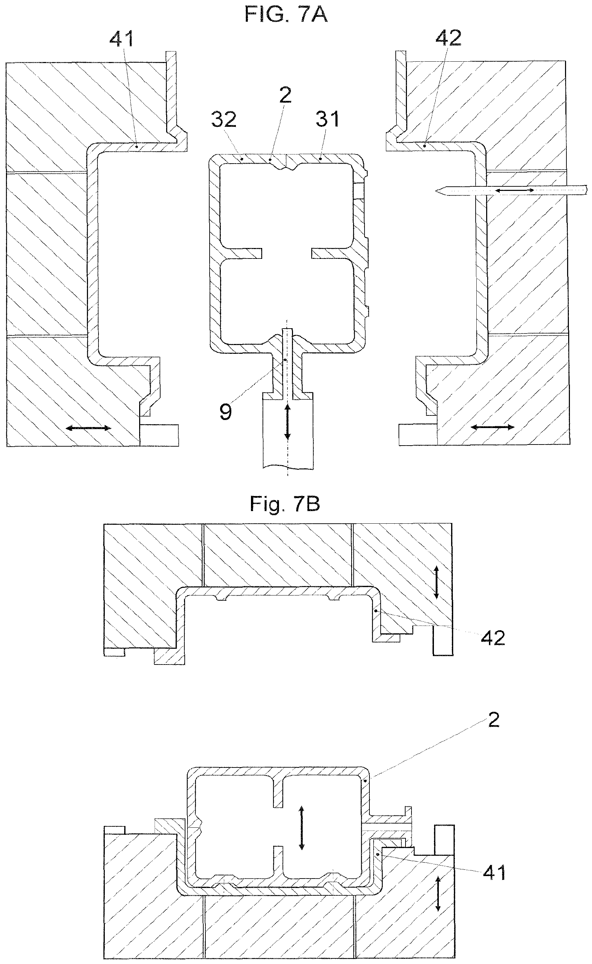

Pour la fabrication de tels réservoirs, on peut procéder comme suit : on fabrique les coquilles des coques interne et externe. Ainsi, dans l'exemple représenté à la figure 6, les coquilles de la coque externe sont fabriquées par extrusion-soufflage ou thermoformage. Une fois les coquilles réalisées, les coquilles de la coque interne sont assemblées l'une à l'autre par soudure, et la coque 2 interne ainsi réalisée est logée entre les deux coquilles de la coque externe, comme illustré à la figure 7A ou à la figure 7B. Le moyen de chargement de la coque interne dans l'outillage (figures 7A, 7B), non représenté, peut être un bras articulé ou tout autre moyen approprié. Une fois le moyen de chargement retiré, la coque interne peut être maintenue en position par une canne de soufflage (figure 7A) et/ou tout autre moyen approprié et non représenté comme par exemple un moyen qui s'escamote lors de la fermeture du moule. La coque interne peut être munie de formes appropriées, non représentées, pour son maintien en position. La coque interne est, par exemple, chauffée ponctuellement. Ce chauffage peut s'opérer indifféremment avant ou une fois la coque 2 interne positionnée entre les coquilles 41 et 42. Les coquilles de la coque externe sont alors rapprochées l'une de l'autre, et enferment la coque interne à l'état assemblé l'une à l'autre, par exemple par soudure. Lors de cette étape d'assemblage, un volume 7 de gaz, à savoir ici de l'air, est maintenu entre les coques interne et externe, sur au moins une partie du pourtour de la coque interne tandis que les coques 2 interne et 4 externe peuvent être liées l'une à l'autre ponctuellement au niveau des zones 8A de liaison prédéterminées et/ou simplement disposées en contact d'appui au niveau des zones 8 de contact d'appui.

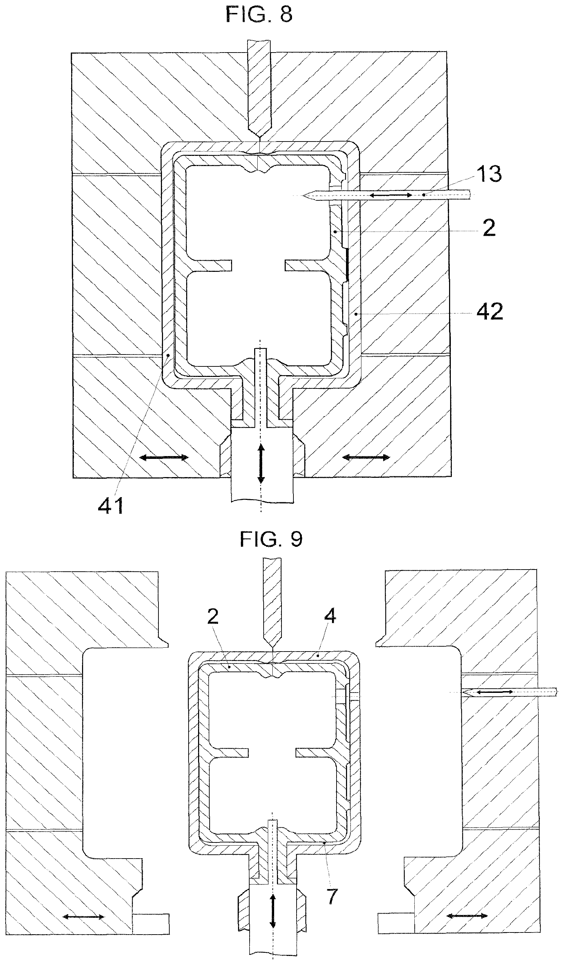

Dans le cas d'une fabrication des coquilles de la coque externe par extrusion-soufflage ou par thermoformage, comme illustré à la figure 8, le réservoir est, à l'issue de l'étape de rapprochement des coquilles de la coque externe, mis sous pression. On note dans la coque interne 2 au moins un orifice qui permet d'équilibrer la pression dans les deux coques, cet orifice se situant autour de l'aiguille de soufflage 13. On note également que l'orifice de remplissage et le goulot associé peuvent être créés au moment de la fabrication du réservoir, cet orifice et son goulot étant, dans ce cas, disposés au niveau du plan de joint de la coque externe 4. Cet orifice et le goulot associé peuvent également être rapportés après assemblage des coques entre elles.

Dans le cas d'une fabrication des coquilles de la coque externe par injection ou par compression ou par rotomoulage ensuite assemblées par soudure, comme illustré à la figure 7B, le réservoir peut, à l'issue de l'étape de rapprochement des coquilles de la coque externe, être mis sous pression. Dans ce cas, la coque interne 2 est munie au moins d'un orifice non représenté qui permet d'équilibrer la pression dans les deux coques. Dans ce procédé de fabrication, une étape de chauffage des plans de soudure des coquilles 41 et 42 est nécessaire.

Le réservoir ainsi obtenu se caractérise notamment par sa tenue au feu et sa simplicité de recyclage, résultant de la facilité de séparation des coques interne et externe du réservoir tout en disposant d'un volume intérieur de la coque interne optimal.

Une fois le réservoir à carburant obtenu, des opérations supplémentaires d'usinage et/ou de soudure et/ou d'assemblage et/ou d'équipement des coques interne et/ou externe sont possibles en vue de finaliser le produit.

## Revendications

1. Réservoir (1) à carburant comprenant une coque (2) interne comprenant au moins deux coquilles (31, 32) en matière de synthèse moulées par injection ou compression et assemblées par soudure, une coque (4) dite externe en matière de synthèse entourant ladite coque (2) interne, cette coque (4) externe comprenant au moins deux coquilles (41, 42) assemblés entre elles, la coque (2) interne étant munie intérieurement au moins d'un pilier (6) de liaison des coquilles (31, 32) entre elles et/ou d'une nervure (5),
et la coque (2) interne étant, sur au moins une partie de son pourtour, séparée de la coque (4) externe par un volume (7) de gaz,
**caractérisé en ce que** la coque (2) interne est sur sa périphérie externe, au niveau de la zone (12) d'assemblage par soudure des coquilles (31, 32), dépourvue de trottoir ou de rebord de soudure sur au moins une partie de son pourtour.

2. Réservoir (1) à carburant selon la revendication 1,
**caractérisé en ce que** la coque (4) externe et la coque (2) interne sont reliées ponctuellement l'une à l'autre.

3. Réservoir (1) à carburant selon la revendication précédente,
**caractérisé en ce que** la ou au moins l'une des zones (8A) de liaison ponctuelle des coques interne (2) et externe (4) entre elles est formée par une soudure des coques interne (2) et externe (4) entre elles.

4. Réservoir (1) à carburant selon l'une des revendications 2 ou 3,
**caractérisé en ce que** la ou au moins l'une des zones (8A) de liaison ponctuelle des coques interne (2) et externe (4) entre elles est formée par une partie mâle en saillie de l'une des coques (2,4), la partie mâle en saillie de ladite coque étant noyée au moins partiellement dans la matière constitutive de l'autre coque.

5. Réservoir (1) à carburant selon l'une des revendications 2 à 4,
**caractérisé en ce que** la ou au moins l'une des zones (8A) de liaison ponctuelle des coques interne (2) et externe (4) entre elles est formée par une partie mâle en saillie de l'une des coques (2, 4), la partie mâle en saillie de ladite coque étant emmanchée serrée ou encliquetée dans un logement disposé dans l'autre coque.

6. Réservoir (1) à carburant selon l'une des revendications 2 à 5,
**caractérisé en ce que** la ou au moins l'une des zones (8A) de liaison ponctuelle des coques interne (2) et externe (4) est formée par l'intermédiaire d'une pièce (11) de liaison interposée entre lesdites coques interne (2) et externe (4) et solidarisée à chacune des coques (2, 4).

7. Réservoir (1) à carburant selon la revendication précédente,
**caractérisé en ce que** la pièce (11) de liaison est fixée à l'une des coques (2, 4) par un montage à emboîtement de formes géométriques complémentaires et à l'autre coque par une liaison de forme ou par une liaison par soudure ou par emmanchement serré ou par encliquetage.

8. Réservoir (1) à carburant selon l'une des revendications 2 à 7,
**caractérisé en ce que** les coquilles (41, 42) de la coque (4) externe sont assemblées par un plan de joint, et **en ce que** la ou au moins l'une des zones (8A) de liaison ponctuelle des coques interne (2) et externe (4) entre elles est formée par une forme en saillie de la coque (2) interne noyée dans une forme disposée dans le plan de joint de la coque (4) externe.

9. Réservoir (1) à carburant selon l'une des revendications 2 à 8,
**caractérisé en ce que** la ou au moins l'une des zones (8A) de liaison ponctuelle des coques interne (2) et externe (4) est disposée au niveau de la partie de la coque (2) interne formant le fond du réservoir (1) et au niveau de la partie de la coque (4) externe formant le fond du réservoir (1)

10. Réservoir (1) à carburant selon l'une des revendications précédentes,
**caractérisé en ce qu'**au moins un composant (10), choisi parmi un tuyau ou un écran ou une gaine ou une sangle ou un renfort, ou un filtre à charbon actif ou un filtre à carburant ou un fil électrique ou un boîtier ou une pompe ou une électrovanne ou un capteur ou une carte électronique ou une entretoise ou un plot filtrant ou un lien ou un support ou un clapet ou un régulateur de pression est inséré dans le volume (7) de gaz.

11. Réservoir (1) à carburant selon l'une des revendications précédentes,
**caractérisé en ce qu'**au moins l'une des coques (2, 4), de préférence la coque (2) interne, est imperméable au carburant, et **en ce qu'**au moins l'un des matériaux de la coque imperméable au carburant est choisi, de préférence, dans le groupe des matériaux formés par les polyoxyméthylènes, les polymères d'alcool vinylique, les polyamides, les polyesters, les polycétones, les polymères fluorés, les polyacrylonitriles, les halogénures de polyvinylidène, les polymères à cristaux liquides et les polyoléfines.

12. Réservoir (1) à carburant selon l'une des revendications précédentes,
**caractérisé en ce que** la coque (2) interne et la coque (4) externe sont en des matériaux différents.

13. Réservoir (1) à carburant selon l'une des revendications 1 à 12,
**caractérisé en ce que** la coque (4) externe et la coque (2) interne sont en contact (8) d'appui ponctuel.

14. Réservoir (1) à carburant selon la revendication précédente,
**caractérisé en ce que** la ou au moins l'une des zones de contact (8) d'appui est formée par un bossage ou saillie d'au moins l'une des coques (2, 4).

15. Réservoir (1) à carburant selon l'une des revendications précédentes,
**caractérisé en ce que** les coquilles (31, 32) de la coque (2) interne sont disposées, à l'état préassemblé, à l'intérieur de la coque (4) externe.

16. Réservoir (1) à carburant selon l'une des revendications précédentes,
**caractérisé en ce que** le volume intérieur de la coque (2) interne et le volume (7) de gaz séparant la coque (4) externe de la coque (2) interne ne communiquent pas ou pas directement entre eux.

17. Réservoir (1) à carburant selon l'une des revendications précédentes, du type dont la coque (2) interne est munie intérieurement d'au moins un pilier (6) de liaison,
**caractérisé en ce que** le ou au moins l'un des piliers (6) de liaison est un pilier télescopique.

18. Procédé de fabrication d'un réservoir (1) à carburant,
le réservoir (1) à carburant étant conforme à l'une des revendications 1 à 17, ledit procédé comprenant une étape d'assemblage des coquilles (31, 32) de la coque (2) interne par soudure, une étape d'insertion de la coque (2) interne entre les coquilles (41, 42) de la coque (4) externe, et une étape de recouvrement de la coque (2) interne par les coquilles (41, 42) de la coque (4) externe, la coque (2) interne étant, sur au moins une partie de son pourtour, séparée de la coque (4) externe par un volume (7) de gaz et sur sa périphérie externe, au niveau de la zone (12) d'assemblage par soudure des coquilles (31, 32), dépourvue de trottoir ou de rebord de soudure sur au moins une partie de son pourtour.

## Patentansprüche

1. Kraftstofftank (1), umfassend eine innere Schale (2), umfassend mindestens zwei Hüllen (31, 32) aus Synthesematerial, die durch Spritzen oder Kompression geformt und durch Schweißen verbunden sind, wobei eine äußere Schale (4) aus Synthesematerial die innere Schale (2) umgibt, wobei diese äußere Schale (4) mindestens zwei miteinander verbundene Hüllen (41, 42) umfasst, wobei die innere Schale (2) innen mit mindestens einem Verbindungspfeiler (6) der Hüllen (31, 32) miteinander und/oder einer Rippe (5) ausgestattet ist,
und wobei die innere Schale (2), über mindestens einen Teil ihres Umfangs, von der äußeren Schale (4) durch ein Gasvolumen (7) getrennt ist, **dadurch gekennzeichnet, dass** die innere Schale (2) auf ihrer äußeren Peripherie im Bereich der Verbindungszone (12) durch Schweißen der Hüllen (31, 32) über mindestens einen Teil ihres Umfangs keinen Schweißbelag oder -kante hat.

2. Kraftstofftank (1) nach Anspruch 1,
**dadurch gekennzeichnet, dass** die äußere Schale (4) und die innere Schale (2) punktuell miteinander verbunden sind.

3. Kraftstofftank (1) nach vorangehendem Anspruch,
**dadurch gekennzeichnet, dass** die oder mindestens eine der punktuellen Verbindungszonen (8A) der inneren (2) und äußeren (4) Schale miteinander von einer Verschweißung der inneren (2) und äußeren (4) Schale miteinander gebildet ist.

4. Kraftstofftank (1) nach einem der Ansprüche 2 oder 3,
**dadurch gekennzeichnet, dass** die oder mindestens eine der punktuellen Verbindungszonen (8A) der inneren (2) und äußeren (4) Schale miteinander von einem männlichen Teil gebildet ist, der aus einer der Schalen (2, 4) hervorsteht, wobei der aus der Schale hervorstehende männliche Teil mindestens teilweise in das Material eingelassen ist, das die andere Schale bildet.

5. Kraftstofftank (1) nach einem der Ansprüche 2 bis 4,
**dadurch gekennzeichnet, dass** die oder mindestens eine der punktuellen Verbindungszonen (8A) der inneren (2) und äußeren (4) Schale miteinander von einem männlichen Teil gebildet ist, der von einer der Schalen (2, 4) hervorsteht, wobei der von der Schale hervorstehende männliche Teil in eine Aufnahme gespannt eingepasst oder eingerastet ist, die in der anderen Schale angeordnet ist.

6. Kraftstofftank (1) nach einem der Ansprüche 2 bis 5,
**dadurch gekennzeichnet, dass** die oder mindestens eine der punktuellen Verbindungszonen (8A) der inneren (2) und äußeren (4) Schale mittels eines Verbindungsteils (11) gebildet ist, das zwischen der inneren (2) und äußeren (4) Schale zwischengestellt ist und mit jeder der Schalen (2, 4) fest verbunden ist.

7. Kraftstofftank (1) nach vorangehendem Anspruch,
**dadurch gekennzeichnet, dass** das Verbindungsteil (11) an einer der Schalen (2, 4) durch eine Steckmontage komplementärer geometrischer Formen und an der anderen Schale durch eine Formverbindung oder durch eine Schweißverbindung oder durch gespanntes Einpassen oder durch Rasten befestigt ist.

8. Kraftstofftank (1) nach einem der Ansprüche 2 bis 7,
**dadurch gekennzeichnet, dass** die Hüllen (41, 42) der äußere Schale (4) durch eine Trennebene verbunden sind und dass die oder mindestens eine der punktuellen Verbindungszonen (8A) der inneren (2) und äußeren (4) Schale miteinander von einer aus der inneren Schale (2) hervorstehenden Form gebildet ist, die in eine Form eingelassen ist, die in der Trennebene der äußeren Schale (4) angeordnet ist.

9. Kraftstofftank (1) nach einem der Ansprüche 2 bis 8,
**dadurch gekennzeichnet, dass** die oder mindestens eine der punktuellen Verbindungszonen (8A) der inneren (2) und äußeren (4) Schale im Bereich des Teils der inneren Schale (2) angeordnet ist, der den Boden des Tanks (1) bildet, und im Bereich des Teils der äußeren Schale (4), der den Boden des Tanks (1) bildet.

10. Kraftstofftank (1) nach einem der vorangehenden Ansprüche,
**dadurch gekennzeichnet, dass** mindestens ein Bauteil (10), ausgewählt aus einem Rohr oder einer Abschirmung oder einem Mantel oder einem Gurt oder einer Verstärkung oder einem Aktivkohlefilter oder einem Kraftstofffilter oder einem elektrischen Draht oder einem Gehäuse oder einer Pumpe oder einem Elektroventil oder einem Sensor oder einer elektronischen Karte oder einer Versteifung oder einem Filterzapfen oder einer Verbindung oder einer Stütze oder einer Klappe oder einem Druckregler, in das Gasvolumen (7) eingesetzt ist.

11. Kraftstofftank (1) nach einem der vorangehenden Ansprüche,
**dadurch gekennzeichnet, dass** mindestens eine der Schalen (2, 4), vorzugsweise die innere Schale (2), für Kraftstoff undurchlässig ist, und dass mindestens eins der kraftstoffundurchlässigen Materialien der Schale vorzugsweise aus der Gruppe der Materialien ausgewählt ist, die von den Polyoxymethylenen, den Vinylalkoholpolymeren, den Polyamiden, den Polyestern, den Polycetonen, den fluorierten Polymeren, den Polyacrylnitrilen, den Polyvinylidenhalogeniden, den Flüssigkeitskristallpolymeren und den Polyolefinen gebildet sind.

12. Kraftstofftank (1) nach einem der vorangehenden Ansprüche,
**dadurch gekennzeichnet, dass** die innere Schale (2) und die äußere Schale (4) aus verschiedenen Materialien sind.

13. Kraftstofftank (1) nach einem der Ansprüche 1 bis 12,
**dadurch gekennzeichnet, dass** die äußere Schale (4) und die innere Schale (2) in punktuellem Stützkontakt (8) sind.

14. Kraftstofftank (1) nach vorangehendem Anspruch,
**dadurch gekennzeichnet, dass** die oder mindestens eine der Stützkontaktzonen (8) durch eine Erhebung oder einen Vorsprung mindestens einer der Schalen (2, 4) gebildet ist.

15. Kraftstofftank (1) nach einem der vorangehenden Ansprüche,
**dadurch gekennzeichnet, dass** die Hüllen (31, 32) der inneren Schale (2) in vormontiertem Zustand im Inneren der äußeren Schale (4) angeordnet sind.

16. Kraftstofftank (1) nach einem der vorangehenden Ansprüche,
**dadurch gekennzeichnet, dass** das Innenvolumen der inneren Schale (2) und das Gasvolumen (7), welches die äußere Schale (4) von der inneren Schale (2) trennt, miteinander nicht oder nicht direkt kommunizieren.

17. Kraftstofftank (1) nach einem der vorangehenden Ansprüche des Typs, dessen innere Schale (2) innen mit mindestens einem Verbindungspfeiler (6) ausgestattet ist,
**dadurch gekennzeichnet, dass** der oder mindestens einer der Verbindungspfeiler (6) ein Teleskoppfeiler ist.

18. Verfahren zur Herstellung eines Kraftstofftanks (1),
wobei der Kraftstofftank (1) nach einem der Ansprüche 1 bis 17 ist, wobei das Verfahren einen Schritt des Verbindens der Hüllen (31, 32) der innere Schale (2) durch Schweißen, einen Schritt des Einsetzens der inneren Schale (2) zwischen die Hüllen (41, 42) der äußeren Schale (4) und einen Schritt des Abdeckens der inneren Schale (2) durch die Hüllen (41, 42) der äußeren Schale (4) umfasst, wobei die innere Schale (2) über mindestens einen Teil ihres Umfangs von der äußeren Schale (4) durch ein Gasvolumen (7) getrennt ist und auf ihrer äußeren Peripherie im Bereich der Verbindungszone (12) durch Schweißen der Hüllen (31, 32) über mindestens einen Teil ihres Umfangs keinen Schweißbelag oder-kante hat.

## Claims

1. A fuel tank (1) comprising an inner hull (2) comprising at least two shells (31, 32) made from a synthetic material by injection or compression molding and assembled by welding, a so-called outer hull (4) made from synthetic material surrounding said inner hull (2), said outer hull (4) comprising at least two shells (41, 42) assembled to one another, the inner hull (2) being inwardly provided with at least one pillar (6) connecting the shells (31, 32) to one another and/or a rib (5), and the inner hull (2) being, over at least part of its perimeter, separated from the outer hull (4) by a volume (7) of gas,
**characterized in that** the inner hull (2) is, over its outer periphery, at the assembly zone (12) by welding of the shells (31, 32), devoid of welding strip or rim over at least part of its perimeter.

2. The fuel tank (1) according to claim 1,
**characterized in that** the outer hull (4) and the inner hull (2) are periodically coupled to one another.

3. The fuel tank (1) according to the preceding claim,
**characterized in that** the or at least one of the periodic connection zones (8A) of the inner (2) and outer (4) hulls to one another is formed by a weld of the inner (2) and outer (4) hulls to one another.

4. The fuel tank (1) according to one of claims 2 or 3,
**characterized in that** the or at least one of the periodic connection zones (8A) of the inner (2) and outer (4) hulls to one another is formed by a male part protruding from one of the hulls (2, 4), the male part protruding from said hull being at least partially embedded in the component material of the other hull.

5. The fuel tank (1) according to one of claims 2 to 4,
**characterized in that** the or at least one of the periodic connection zones (8A) of the inner (2) and outer (4) hulls to one another is formed by a male part protruding from one of the hulls (2, 4), the male part protruding from said hull being tightly fitted or snapped in a housing positioned in the other hull.

6. The fuel tank (1) according to one of claims 2 to 5,
**characterized in that** the or at least one of the periodic connection zones (8A) of the inner (2) and outer (4) shells is formed by means of a connection part (11) inserted between said inner (2) and outer (4) shells and secured to each of the shells (2, 4).

7. The fuel tank (1) according to the preceding claim,
**characterized in that** the connection part (11) is fastened to one of the hulls (2, 4) by a fitted assembly of complementary geometric shapes and to the other hull by a shape connection or by a welded connection or by tight fitting or by snapping.

8. The fuel tank (1) according to one of claims 2 to 7,
**characterized in that** the shells (41, 42) of the outer hull (4) are assembled by a joining plane, and **in that** the or at least one of the periodic connection zones (8A) of the inner (2) and outer (4) hulls to one another is formed by a shape protruding from the inner hull (2) embedded in a shape positioned in the joining plane of the outer hull (4).

9. The fuel tank (1) according to one of claims 2 to 8,
**characterized in that** the or at least one of the periodic connection zones (8A) of the inner (2) and outer (4) hulls is positioned at the part of the inner hull (2) forming the bottom of the tank (1) and the part of the outer hull (4) forming the bottom of the tank (1).

10. The fuel tank (1) according to one of the preceding claims,
**characterized in that** at least one component (10), chosen from a pipe or a screen or sheath or a strap or reinforcement, or an activated carbon filter or a fuel filter or an electrical wire or a housing or a pump or a solenoid valve or a sensor or an electronic board or a spacer or a filtering cone or a link or a support or a valve or a pressure regulator, is inserted into the gas volume (7).

11. The fuel tank (1) according to one of the preceding claims,
**characterized in that** at least one of the hulls (2, 4), preferably the inner hull (2), is impermeable to the fuel, and **in that** at least one of the materials of the hull impermeable to the fuel is chosen, preferably, from the group of materials formed by polyoxymethylenes, vinyl alcohol polymers, polyamides, polyesters, polyketones, fluorinated polymers, polyacrylonitriles, polyvinylidene halogenides, liquid crystal polymers and polyolefins.

12. The fuel tank (1) according to one of the preceding claims,
**characterized in that** the inner hull (2) and the outer hull (4) are made from different materials.

13. The fuel tank (1) according to one of claims 1 to 12,
**characterized in that** the outer hull (4) and the inner hull (2) are in periodic bearing contact (8).

14. The fuel tank (1) according to the preceding claim,
**characterized in that** the or at least one of the bearing contact zones (8) is formed by a boss or protrusion of at least one of the hulls (2, 4).

15. The fuel tank (1) according to one of the preceding claims,
**characterized in that** the shells (31, 32) of the inner hull (2) are positioned, in the preassembled state, inside the outer hull (4).

16. The fuel tank (1) according to one of the preceding claims,
**characterized in that** the inner volume of the inner hull (2) and the volume (7) of gas separating the outer hull (4) from the inner hull (2) do not communicate or do not communicate directly with one another.

17. The fuel tank (1) according to one of the preceding claims, of the type wherein the inner hull (2) is inwardly provided with at least one connecting pillar (6),
**characterized in that** the or at least one of the connecting pillars (6) is a telescoping pillar.

18. A method for manufacturing a fuel tank (1),
the fuel tank (1) being according to one of claims 1 to 17, said method comprising a step for assembling the shells (31, 32) of the inner hull (2) by welding, a step for inserting the inner hull (2) between the shells (41, 42) of the outer hull (4), and a step for covering the inner hull (2) with the shells (41, 42) of the outer hull (4), the inner hull (2) being, over at least part of its perimeter, separated from the outer hull (4) by a volume of gas (7) and on its outer periphery, at the zone (12) for assembly by welding of the shells (31, 32), devoid of welding strip or rim over at least part of its perimeter.
